# EUROPEAN PATENT SPECIFICATION

(11) **EP 0 938 997 B1**
(45) Date of publication and mention of the grant of the patent: **21.01.2004**
(21) Application number: 99103290.5
(22) Date of filing: 19.02.1999
(51) Int. Cl.: B60N 2/20

(54) **Foldable reclining seat for vehicle**
Umklappbarer, verstellbarer Fahrzeugsitz
Siège rabattable et inclinable pour véhicule

(30) Priority: 27.02.1998 JP 4703498
(43) Date of publication of application: 01.09.1999
(73) Proprietor: FUJI KIKO COMPANY LIMITED, Tokyo 103-0023 (JP); SUZUKI MOTOR CORPORATION, Shizuoka 432-8611 (JP)
(72) Inventor: Ohba, Tetsuya, Washizu Plant of FUJI KIKO CO.,LTD., Kosai-shi, Shizuoka 431-0431 (JP); Tanigawa, Masaki, Inasa-gun, Shizuoka 431-1304 (JP)
(74) Representative: Grünecker, Kinkeldey, Stockmair & Schwanhäusser Anwaltssozietät

(56) References cited:
- EP-A- 0 776 781
- DE-A- 3 828 659
- DE-A- 4 142 924
- DE-A- 19 502 333
- US-A- 5 570 931
- PATENT ABSTRACTS OF JAPAN vol. 1995, no. 08, 29 September 1995 (1995-09-29) & JP 07 117541 A (SUZUKI MOTOR CORP), 9 May 1995 (1995-05-09)

## Description

### BACKGROUND OF THE INVENTION

### 1. Field of the Invention

The present invention relates in general to vehicular seats and more particularly to the vehicular seats of a foldable reclining type. More specifically, the present invention relates to the foldable reclining seats for vehicles, which are commonly used as rear seats in a ban-type and/or one-box type motor vehicle.

### 2. Description of the Prior Art

In ban-type and/or one-box type motor vehicles, foldable seats are commonly used as rear seats for providing the rear part of the vehicle cabin with a larger luggage space when loading of a larger amount of luggage is needed by the vehicle. That is, when a seatback of the rear seat, which is arranged to face forward, is folded onto a seat proper, the luggage space is increased by a degree corresponding to the area possessed by the back of the folded seatback. Some of the foldable seats are of a reclining type which can provide the seatback with a desired angular position for comfortable sitting of a seat occupant.

Hitherto, various foldable reclining seats have been proposed and put into practical use for the above-mentioned purposes. However, some of them fail to give users satisfaction due to a troublesome handling work needed by the users for reclining the seatback to a desired angular position and/or folding the seatback onto the seat proper. Furthermore, in some of the conventional foldable reclining seats, it sometimes occurs that the seatback unexpectedly hits the back of the seat occupant when he or she is trying to adjust the angular position of the seatback. The undesired hitting by the seatback is caused by a return spring arranged to bias the seatback forwardly. A foldable reclining seat according to the preamble of claim 1 is known from US 5 570 931A.

### SUMMARY OF THE INVENTION

It is therefore an object of the present invention to provide a foldable reclining seat of a vehicle, which is free of the above-mentioned drawbacks.

According to the present invention, there is provided a foldable reclining seat of a vehicle, which can be easily and safely handled by a seat occupant.

According to the present invention, there is provided a foldable reclining seat adapted to be mounted on a floor. The seat comprises a seat proper adapted to be mounted on the floor; a seatback arranged at a rear portion of the seat proper and pivotal about a given axis; biasing means for biasing the seatback to pivot in a folding direction relative to the seat proper; a reclining mechanism arranged at one side of the seat, the reclining mechanism enabling the seatback to take a desired angular position within a given range relative to the seat proper, the reclining mechanism assuming a locked condition wherein the seatback at the desired angular position is locked relative to the seat proper and an unlocked condition wherein the seatback is permitted to pivot in the folding direction due to the force of the biasing means; a stopper mechanism arranged at the other side of the seat, the stopper mechanism assuming a first condition wherein the seatback is permitted to pivot within a range corresponding to the given range and a second condition wherein the seatback is permitted to pivot in the folding direction to such a degree as to be folded onto the seat proper; a first controller for controlling only the reclining mechanism to select one of the locked and unlocked conditions of the same; and a second controller for controlling both the reclining mechanism and the stopper mechanism to select one of the locked and unlocked conditions of the reclining mechanism and select one of the first and second conditions of the stopper mechanism.

### BRIEF DESCRIPTION OF THE DRAWINGS

Other objects and advantages of the present invention will become apparent from the following description when taken in conjunction with the accompanying drawings, in which:
Fig. 1 is a perspective view of a foldable reclining seat according to the present invention;
Fig. 2 is a partially cut side view of a lever unit employed in the foldable reclining seat of the invention, which view is taken from the direction of the arrow "II" of Fig. 1;
Fig. 3 is a front view of the lever unit, which is taken from the direction of the arrow "III" of Fig. 2;
Fig. 4 is a sectioned plan view of the lever unit;
Fig. 5 is a sectional view of the lever unit at the position where a pull tab is provided;
Fig. 6 is an illustration depicting operation of the lever unit;
Fig. 7 is a view similar to Fig. 6, but showing a different condition of the lever unit;
Fig. 8 is a side view of a stopper mechanism employed in the foldable reclining seat of the invention;
Fig. 9 is a back view of the stopper mechanism;
Fig. 10 is an illustration depicting operation of the stopper mechanism; and
Fig. 11 is a side view of a reclining mechanism employed in the foldable reclining seat of the invention.

### DETAILED DESCRIPTION OF THE INVENTION

In the following, a foldable reclining seat of the present invention will be described in detail with reference to the accompanying drawings. Directional terms, such as, front, rear, right, left, upward, downward, etc., are to be understood with respect to a passenger who is seated on the seat facing forward.

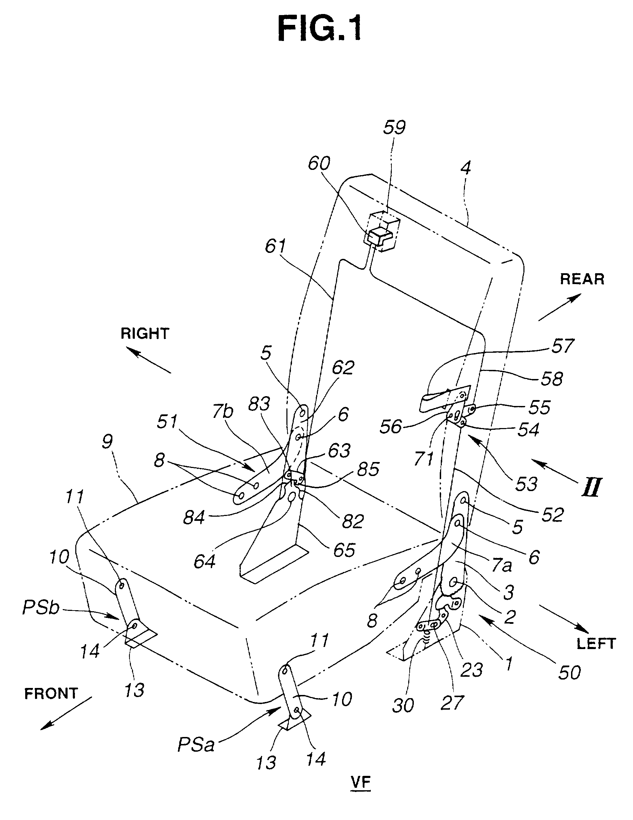

Referring to the drawings, particularly, Fig. 1, there is shown the foldable reclining seat according to the present invention, which seat is adapted to be used as a rear seat in ban-type and/or one-box type motor vehicles.

The foldable reclining seat comprises generally a seat proper 9, a seatback 4, a reclining mechanism 50 and a stopper mechanism 51. That is, as will be described in detail hereinafter, the seatback 4 is pivotally arranged at a rear side of the seat proper 9 through the reclining mechanism 50 and the stopper mechanism 51.

As shown, a front portion of the seat proper 9 is pivotally supported on a vehicular floor VF through two pivotal support units "PSa" and "PSb". Each pivotal support unit includes a bracket 13 which is secured to the vehicle floor VF and a link 10 which has a lower end pivotally connected through a pin 14 to the bracket 13 and an upper end pivotally connected through a pin 11 to a front side portion of the seat proper 9.

Also, a rear portion of the seat proper 9 is pivotally supported on the vehicle floor VF through both the reclining mechanism 50 and the stopper mechanism 51 in such a manner as will become apparent as the description proceeds.

The reclining mechanism 50 comprises a base plate 1 which is mounted on the vehicle floor "VF". An arm 3 is pivotally connected to the base plate 1 through a left center shaft 2. The arm 3 is secured to a lower left side of the seatback 4 by means of bolts 5.

A curved follower link 7a is secured at its lower portion to a rear left side of the seat proper 9 through bolts 8 and pivotally connected at its upper end to the arm 3 through a pivot pin 6.

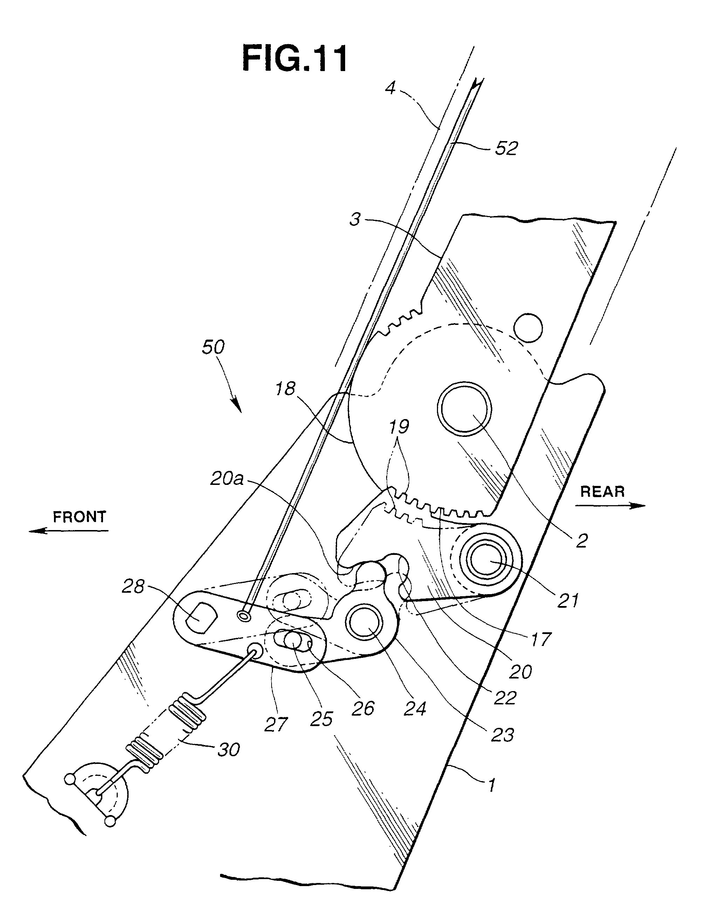

The detail of the reclining mechanism 50 is shown in Fig. 11.

As shown, the arm 3 is formed at its lower end with a semi-rounded portion 18. The periphery of the semi-rounded portion 18 is concentric with the left center shaft 2 and has a toothed portion 17 therearound. A tooth member 20 is pivotally connected through a pivot shaft 21 to the base plate 1, which has a toothed portion 19 selectively engageable with the toothed portion 17 of the arm 3. The tooth member 20 is formed at its free lower end with both a guide edge 20a and a recess 22. A cam 23 is pivotally connected through a pivot shaft 24 to the base plate 1, which is selectively engageable with the free lower end (viz., the guide edge 20a and the recess 22) of the tooth member 20. The cam 23 is provided with a pin 25 which is movably put in an elongate slot 26 formed in a lever 27. The lever 27 is pivotally connected through a shaft 28 to the base plate 1. The lever 27 is biased in a clockwise direction about the shaft 28 by means of a spring 30. Pivotally connected to the lever 27 is an actuating rod 52 which leads to an after-mentioned lever unit 53 (see Fig. 1).

In normal condition of the reclining mechanism 50, due to the force of the spring 30, the lever 27 is biased downward in Fig. 11 causing the cam 23 to abut against the guide edge 20a of the tooth member 20 and thus causing the toothed portion 19 of the tooth member 20 to engage with the toothed portion 17 of the arm 3. That is, under this condition, the seatback 4 to which the arm 3 is secured is kept locked at a certain angular position relative to the seat proper 9. As will be described in detail hereinafter, when the actuating rod 52 is pulled upward, the locked condition of the seatback 4 becomes cancelled.

Although not shown in the drawings, a triangular plate member is spacedly mounted on the base plate 1 to rotatably support one ends of the center shaft 2 and the pivot shafts 21 and 24.

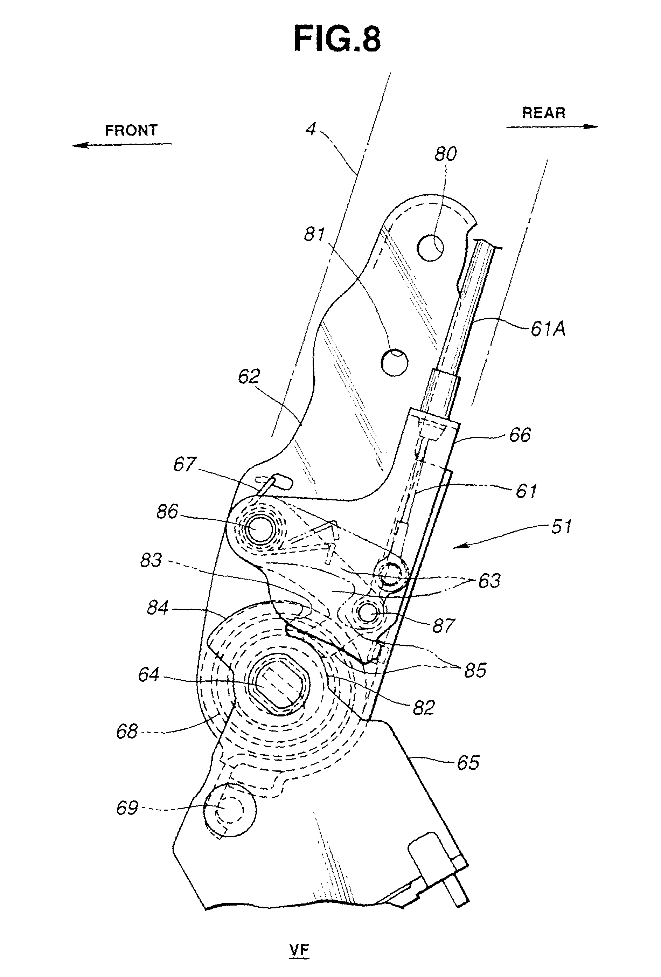

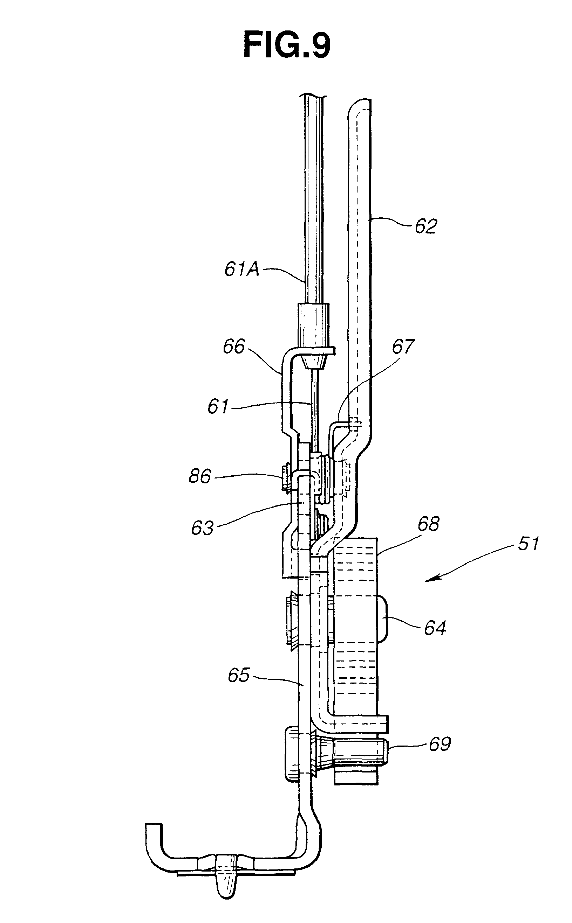

As will be described hereinafter, due to work of an after-mentioned return spring (68, see Figs. 8 and 9) incorporated with the stopper mechanism 51, the seatback 4 is constantly biased to pivot forwardly (viz., leftward in Fig. 11) about an axis of the left center shaft 2.

Referring back to Fig. 1, the lever unit 53 is seen, which is installed on a front left edge of the seatback 4. The lever unit 53 generally comprises a first pivotal lever 54 to which the above-mentioned actuating rod 52 from the lever 27 is pivotally connected, a second pivotal lever 55 to which an after-mentioned actuating wire 58 is pivotally connected and a third pivotal lever 56 to which a pull tab 57 is pivotally connected. These first, second and third pivotal levers 54, 55 and 56 are pivotally connected to the seatback 4 (more specifically, a bracket 70 secured to a frame of the seatback 4) through a common pivot shaft 71 in an after-mentioned manner. As is seen, the actuating wire 58 extends upward in the seatback 4 to a control knob 60 which is vertically slidably received in a recess 59 formed in an upper part of the seatback 4. Another actuating wire 61 extends downward from the control knob 60 toward the stopper mechanism 51.

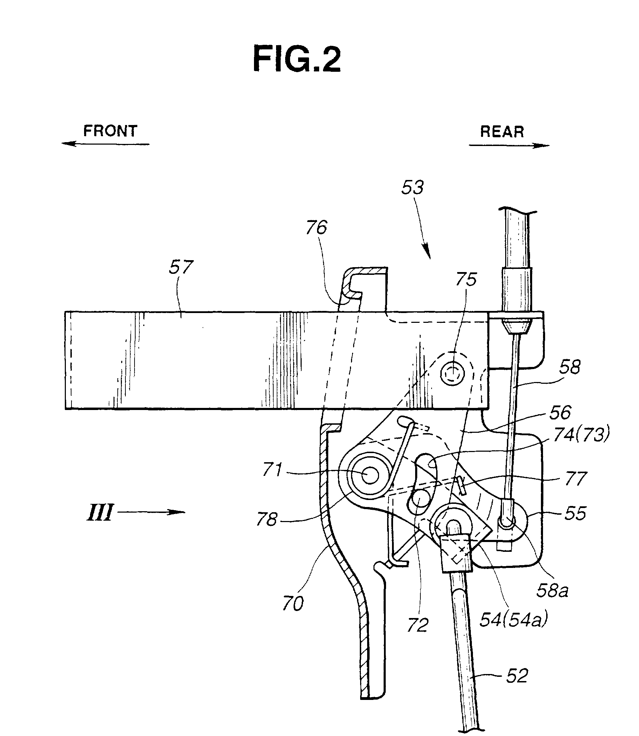

The detail of the lever unit 53 is shown in Figs. 2 to 5.

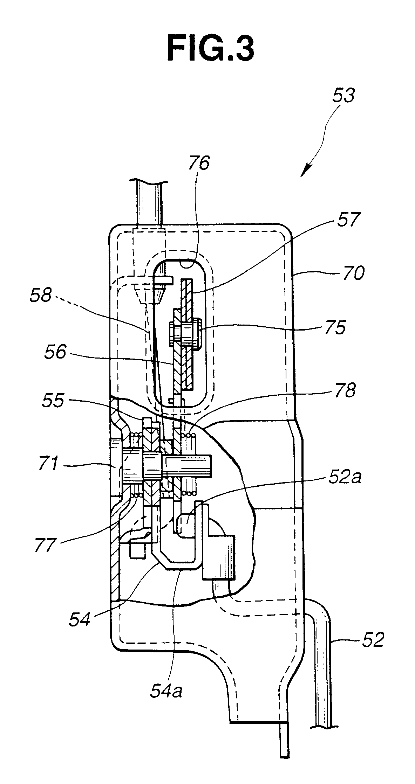

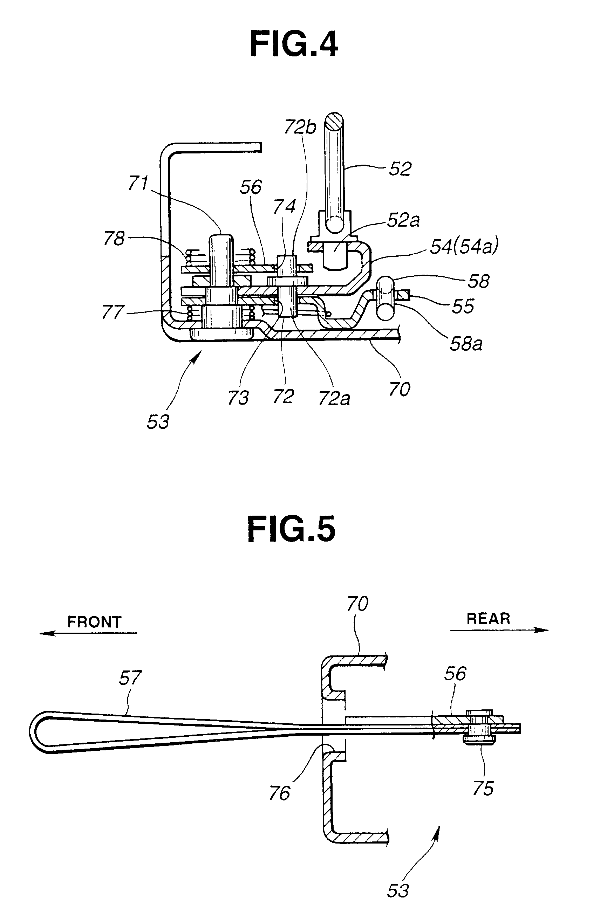

As is shown by these drawings, particularly Fig. 2, the lever unit 53 is mounted on a bracket 70 secured to the frame of the seatback 4. The above-mentioned first, second and third pivotal levers 54, 55 and 56 are pivotally connected through the common pivot shaft 71 to the bracket 70. As is understood from Figs. 3 and 4, the first pivotal lever 54 is interposed between the second and third pivotal levers 55 and 56, and as is seen from Fig. 1, among these levers 54, 55 and 56, the third pivotal lever 56 is positioned at the outermost left side.

As is best shown in Fig. 4, the first pivotal lever 54 is equipped with a control pin 72 which has one end 72a slidably received in an arcuate slot 73 formed in the second pivotal lever 55 and the other end 72b slidably received in an arcuate slot 74 formed in the third pivotal lever 56.

As is best seen from Figs. 1 and 3, the first pivotal lever 54 has a U-shaped free end 54a to which an upper bent end 52a of the actuating rod 52 is pivotally connected. As is best seen from Figs. 1 and 2, a lower bend end 58a of the actuating wire 58 is pivotally connected to a free end of the second pivotal lever 55, and a rear end of the pull tab 57 is pivotally connected through a pin 75 to a free end of the third pivotal lever 56. As is seen Figs. 2, 3 and 5, the pull tab 57 passes through an opening 76 formed in the bracket 70.

As will be understood from Fig. 2, the respective arcuate slots 73 and 74 formed in the second and third pivotal levers 55 and 56 are coaxial with the common pivot shaft 71 and have the same length.

Under a normal condition wherein no force is applied to the lever unit 53 from the pull tab 57 and the actuating wire 58, the second and third pivotal levers 55 and 56 assume their rest positions so that the respective arcuate slots 73 and 74 coincide with each other having the control pin 72 of the first pivotal lever 54 left at lower positions of the slots 73 and 74 as shown in Fig. 2.

To the second pivotal lever 55, there is hooked one end of a biasing spring 77 which is disposed at a turned middle portion thereof about the common pivot shaft 71 and has the other end hooked to the bracket 70. To the third pivotal lever 56, there is hooked one end of another biasing spring 78 which is disposed at a turned middle portion thereof about the pivot shaft 71 and has the other end hooked to the bracket 70. With these biasing springs 77 and 78, both the second and third pivotal levers 55 and 56 are biased to pivot in a clockwise direction in Fig. 2. That is, the above-mentioned normal condition is established by the biasing force of the two biasing springs 77 and 78.

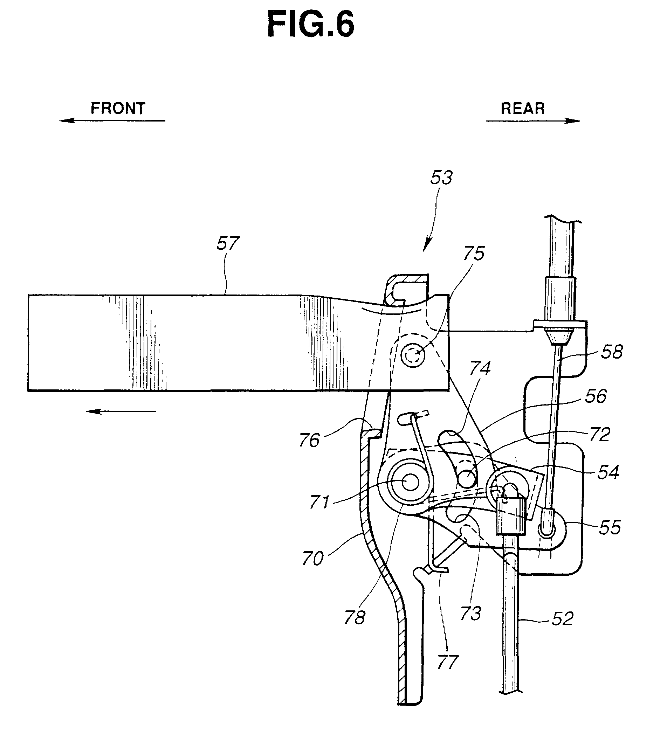

Thus, when, with the lever unit 53 assuming the normal condition, the pull tab 57 is pulled forward as is seen from Fig. 6, the third pivotal lever 56 is forced to pivot in a counterclockwise direction about the pivot shaft 71 against the force of the biasing spring 78. Due to this counterclockwise rotation of the third pivotal lever 56, a lower end of the actuate slot 73 of the third pivotal lever 56 comes into abutment with the control pin 72 of the first pivotal lever 54 and pushes the same upward thereby pivoting the first pivotal lever 54 in a counterclockwise direction. With this, the actuating rod 52 is pulled upward to cause an after-mentioned released condition of the reclining mechanism 50. That is, in the released condition of the mechanism 50, the seatback 4 can freely pivot to a desired angular position relative to the seat proper 9.

During the counterclockwise movement of the first pivotal lever 54, the control pin 72 (more specially, the end 72a of the control pin 72) secured thereto makes an idling movement in the arcuate slot 73 of the second pivotal lever 55, and thus, the second pivotal lever 55 is not moved.

When now the pull tab 57 is released, the third pivotal lever 56 is forced to return to its original rest position due to the force of the biasing spring 78 and the above-mentioned spring 30 of the reclining mechanism 50, causing the actuating rod 52 to move downward. With this movement, the reclining mechanism 50 is allowed to assume a locked condition, as will be described in detail hereinafter.

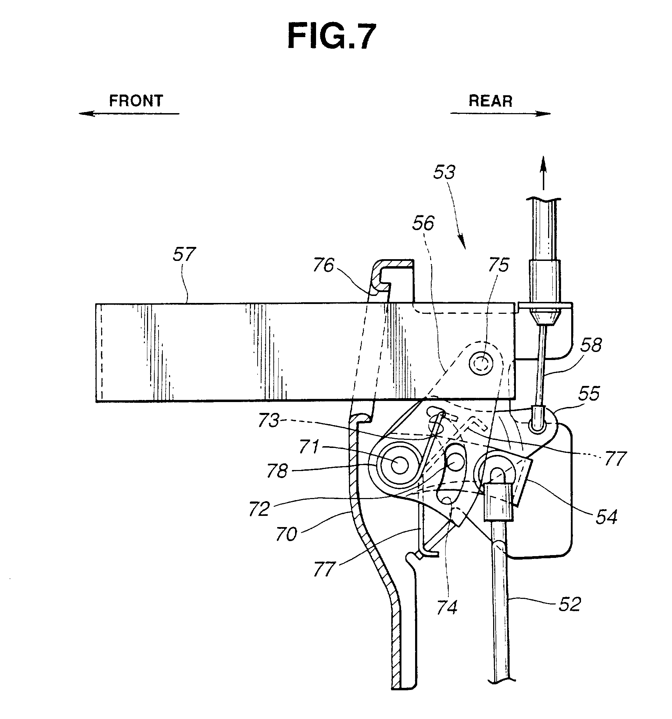

While, when, with the lever unit 53 assuming the normal condition, the actuating wire 58 is pulled upward due to handling of the control knob 60 (see Fig. 1) as is seen from Fig. 7, the second pivotal lever 55 is forced to pivot in a counterclockwise direction against the force of the other biasing spring 77. Due to this counterclockwise rotation of the second pivotal lever 55, a lower end of the arcuate slot 73 of the second pivotal lever 55 comes into abutment with the control pin 72 of the first pivotal lever 54 and pushes the same upward thereby pivoting the first pivotal lever 54 in a counterclockwise direction. With this, the actuating rod 52 is pulled upward to cause the released condition of the reclining mechanism 50. During the counterclockwise movement of the first pivotal lever 54, the control pin 72 (more specifically, the other end 72b of the pin 72) secured thereto makes an idling movement in the arcuate slot 74 of the third pivotal lever 56, and thus, the third pivotal lever 56 is not moved.

When the control knob 60 (see Fig. 1) is released, the second pivotal lever 55 is forced to return to its original rest position due to the force of the biasing spring 77 and the above-mentioned spring 30 of the reclining mechanism 50, causing the actuating rod 52 to move downward. With this movement, the reclining mechanism 50 is brought to the locked condition.

Referring back to Fig. 1, the stopper mechanism 51 comprises a base plate 65 which is mounted on the vehicle floor "VF". An arm 62 is pivotally connected to the base plate 65 through a right center shaft 64.

It is to be noted that the right center shaft 64 and the above-mentioned left center shaft 2 are coaxial with each other, so that the seatback 4 can pivot about a common axis of these shafts 64 and 2.

The arm 62 is secured to a lower right side of the seatback 4 by means of bolts 5. (Bolt holes 80 and 81 formed in the arm 62 through which the bolts 5 pass are shown in Fig. 8.) A curved follower link 7b is secured at its lower portion to a rear right side of the seat proper 9 through bolts 8 and pivotally connected at its upper end to the arm 62 through a pivot pin 6.

As will become apparent hereafter, the two curved followers 7a and 7b and the two pivotal support units "PSa" and "PSb" constitute a so-called seat sinking mechanism which can sink or lower the seat when the seatback 4 is folded onto the seat proper 9.

The detail of the stopper mechanism 51 is shown in Figs. 8 and 9.

As is seen from these drawings, particularly from Fig. 8, the base plate 65 is formed at an upper portion thereof with both an arcuate recess 82 and a projected arcuate ridge 84 each being concentric with the common axis of the left and right center shafts 2 and 64. Thus, a stopper wall 83 is defined between the arcuate recess 82 and the arcuate ridge 84. As will become apparent as the description proceeds, the length of the arcuate recess 82 is so determined as to permit an adequate reclining movement of the seatback 4, that is, a pivotal movement of the seatback 4 between a certain rearwardly inclined position and a certain raised position.

A lock lever 63 is pivotally connected through a shaft 86 to the arm 62. As shown, the lock lever 63 is formed at its free end with a pawl 85 which is received in the arcuate recess 82 of the base plate 65. To the pawl 85, there is pivotally connected through a pin 87 a lower end of the above-mentioned actuating wire 61 which extends from the control knob 60. A leading end of a sleeve 61A of the actuating wire 61 is fixed to a holder bracket 66 which is secured to the arm 62 to move therewith. The holder bracket 66 supports one end of the shaft 86. A biasing spring 67 is disposed at its turned middle portion about the shaft 86 with one end hooked to the lock lever 63 and the other end hooked to the arm 62, so that the lock lever 63 is biased to pivot in a clockwise direction in Fig. 8, that is, in a direction to put the pawl 85 of the lock lever 63 into the arcuate recess 82 of the base plate 65.

A return spring 68 of spiral type is disposed about the center shaft 64 with an inner end held by the center shaft 64 and an outer end hooked to a pin 69 secured to the base plate 65. With this return spring 68, the seatback 4 to which the arm 62 is secured is constantly biased to pivot forwardly about the common axis of the center shafts 64 and 2. It is to be noted that the center shaft 64 and the arm 62 rotate like a single unit.

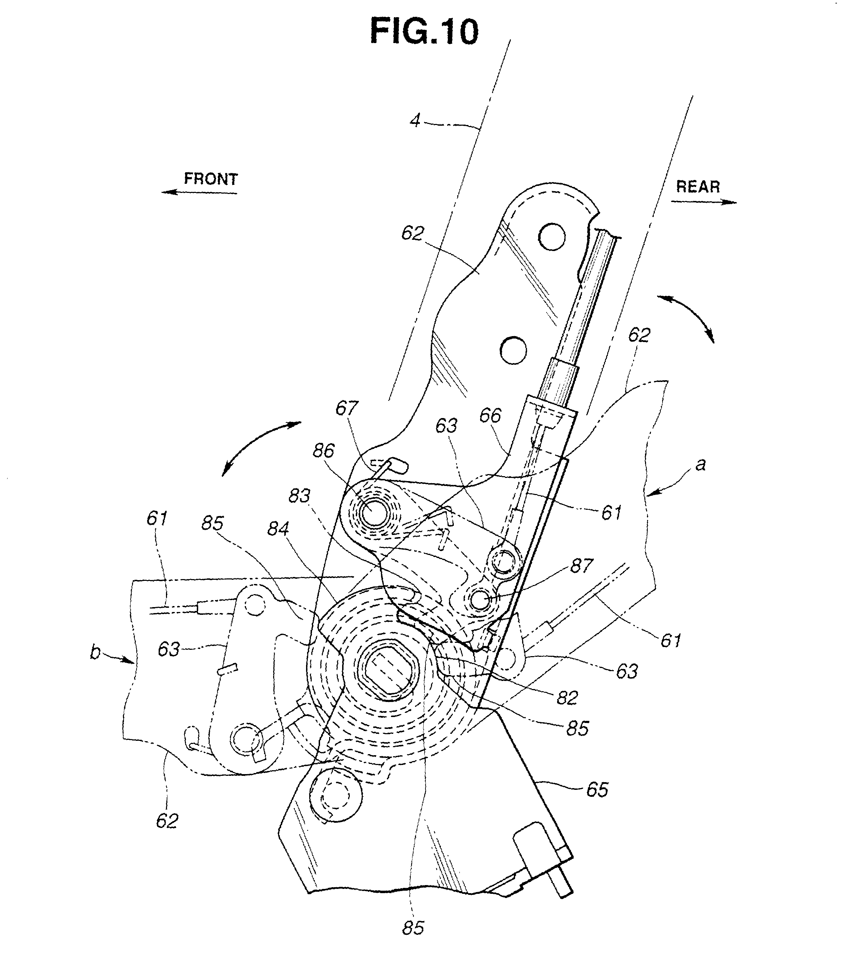

Accordingly, as is seen from Fig. 10, when the arm 62 (viz., the seatback 4 to which the arm 62 is secured) is pivoted forward from the position "a" to a substantially upright position, the pawl 85 of the lock lever 63 is brought into abutment with the stopper wall 83 of the base plate 65. Thus, once the abutment of the pawl 85 against the stopper wall 83 occurs, further forward pivoting of the seatback 4 is suppressed. It is to be noted that due to function of the above-mentioned reclining mechanism 50, the seatback 4 can take a desired angular position within a given range determined by the movement of the pawl 85 on and along the bottom of the arcuate recess 82. That is, only when the stopper mechanism 51 assumes such an operative condition as shown in Fig. 8, the reclining mechanism 50 can provide the seatback 4 with a desired angular position.

When, with the pawl 85 kept in abutment with the stopper wall 83, the actuating wire 61 is pulled upward due to handling of the control knob 60 (see Fig. 1), the lock lever 63 is pulled upward causing the pawl 85 thereof to ride over the stopper wall 83 and put on the projected arcuate ridge 84. Thus, under this condition, the seatback 4 can be pivoted forward when a certain force is applied to the seatback 4. During this pivoting, the pawl 85 of the lock lever 63 runs forward on the projected arcuate ridge 84. As is seen from the drawing, when the seatback 4 assumes the fully folded position indicated by "b" wherein the seatback 4 is intimately put on the seat proper 9, the pawl 85 of the lock lever 63 stays on a front end of the arcuate ridge 84. Thus, when a certain external force is applied to the seatback 4, the seatback 4 can be easily raised up to the above-mentioned upright position moving the pawl 85 back to the arcuate recess 82. As will become apparent hereinafter, the forward pivoting of the seatback 4 toward the fully folded position induces a pivotal lowering of the seat proper 9 due to work of the curved follower links 7a and 7b and the pivotal support units "PSa" and "PSb".

In the following, operation of the foldable reclining seat of the present invention will be described entirely in detail with reference to the drawings.

For ease of understanding, the description will be commenced with respect to a normal position of the seat.

That is, in this normal position, the reclining mechanism 50 (see Fig. 11) assumes a locked condition wherein the tooth member 20 is engaged with the toothed portion 19 having the cam 23 engaged with the guide edge 20a as shown, and the stopper mechanism 51 (see Fig. 8) assumes a condition wherein the pawl 85 of the lock lever 63 is received in the arcuate recess 82.

When now a seat occupant or passenger seated on the seat pulls the pull tab 57 (see Fig. 6) forward, the third pivotal lever 56 is pulled thereby pulling up the actuating rod 52 through the control pin 72 and the first pivotal lever 54 as has been described hereinabove. With this upward movement of the actuating rod 52, the lever 27 (see Fig. 11) is pivoted upward causing the cam 23 to slide into the recess 22 of the tooth member 20 and push the tooth member 20 away from the arm 3 canceling the engagement between the toothed portion 19 of the tooth member 20 and the toothed portion 17 of the arm 3. Upon the canceling, the seatback 4 is pivoted forward and abuts against the back of the seat occupant due to the biasing force of the return spring 68 incorporated with the stopper mechanism 51. That is, under this condition, the angular position of the seatback 4 is changeable at will within the range determined by the movement of the pawl 85 in the arcuate recess 82 (see Fig. 8) of the free-hinge mechanism.

In other words, due to abutment of the pawl 85 against the stopper wall 83 of the arcuate recess 82, the forward pivoting of the seatback 4 is limited. Accordingly, the undesired hitting of the seat occupant's back by the seatback 4 is suppressed or at least minimized.

When now the seat occupant releases the pull tab 57 having the seatback 4 inclined at a desired angular position, the actuating rod 52 (see Fig. 11) is moved downward due to the force of the spring 30. With this movement, the cam 23 is slid onto the guide edge 20a of the tooth member 20 thereby establishing an engagement between the toothed portion 19 of the tooth member 20 and the toothed portion 17 of the arm 3. Thus, the seatback 4 is locked at the desired angular position.

When now the control knob 60 (see Fig. 1) is pulled upward by a certain degree, the actuating wire 58 for the reclining mechanism 50 and the other actuating wire 61 for the stopper mechanism 51 are both moved upward. Due to the upward movement of the actuating wire 58, the second pivotal lever 55 of the lever unit 53 (see Fig. 7) is pivoted upward thereby canceling the locked condition of the reclining mechanism 50 as has been described hereinabove, and due to the upward movement of the other actuating wire 61, the pawl 85 of the lock lever 63 (see Fig. 8) is forced to ride over the stopper wall 83 and put on the projected arcuate ridge 84 of the base plate 65 as has been described hereinabove. Under this condition, there is no means for stopping the forward pivoting of the seatback 4. Thus, due to the force of the return spring 68, the seatback 4 is pivoted forward and folded onto the seat proper 9. During this folding movement of the seatback 4, the two curved follower links 7a and 7b (see Fig. 1) push the seat proper 9 forward relative to the base plates 1 and 65 thereby pivotally lowering the seat proper 9 onto the vehicle floor "VF" while pivoting the pivotal support units "PSa" and "PSb".

Thus, the luggage space provided at the rear part of the vehicle cabin becomes increased by a degree corresponding to the area possessed by the back of the seatback 4. Due to the lowering of the seat proper 9, the back surface of the seatback 4 becomes flush with the floor of the luggage space.

When applied with an external force, the seatback 4 is raised upward moving back the pawl 85 of the lock lever 63 on the arcuate ridge 84 (see Fig. 10), and when thus the seatback 4 comes to the certain upright position, the pawl 85 falls into the arcuate recess 82 with the force of the spring 67. Upon this, the actuating wire 61 and thus the other actuating wire 58 (see Fig. 1) are permitted to move downward and thus the reclining mechanism 50 (see Fig. 11) is brought to the locked condition and the stopper mechanism 51 is brought to the operative condition as shown in Fig. 8. If the seat occupant wishes to change the angular position of the seatback 4, he or she must pull the pull tab 57.

As has been described hereinabove, in the foldable reclining seat of the invention, the handling work needed for reclining the seatback 4 to a desired angular position and folding the seatback 4 onto the seat proper 9 is very easy. Furthermore, due to provision of the stopper mechanism 51, the seat occupant is suppressed from being hardly hit by seatback 4 when he or she handles the pull tab 57. Furthermore, due to the sinking movement of the seat proper 9, the back surface of the seatback 4 folded on the seat proper 9 can provide the enlarged luggage space with an entirelv flat floor.

Although the invention has been described above by reference to a certain embodiment of the invention, the invention is not limited to the embodiment described above. Modifications and variations of the embodiment described above will occur to those skilled in the art, in light of the above teachings, and all within the frame of the appended claims.

## Claims

1. A foldable reclining seat adapted to be mounted on a floor, comprising:
a seat proper (9) adapted to be mounted on said floor;
a seatback (4) arranged at a rear portion of said seat proper and pivotal about a given axis;
a reclining mechanism (50) arranged at one side of the seat, said reclining mechanism (50) enabling said seatback to take a desired angular position within a given range relative to said seat proper, said reclining mechanism assuming a locked condition wherein said seatback at the desired angular position is locked relative to said seat proper and an unlocked condition wherein said seatback is permitted to pivot in the folding direction **characterised by** a biasing means (68) for biasing said seatback to pivot in a folding direction relative to said seat proper when said reclining mechanism (50) is in said unlocked condition;
a stopper mechanism arranged at the other side of said seat, said stopper mechanism assuming a first condition wherein said seatback is permitted to pivot within a range corresponding to said given range and a second condition wherein said seatback is permitted to pivot in the folding direction to such a degree as to be folded onto said seat proper;
a first controller (52, 53) for controlling only said reclining mechanism to select one of the locked and unlocked conditions of the same; and
a second controller (60, 61) for controlling both said reclining mechanism (50) and said stopper mechanism (51) to select one of the locked and unlocked conditions of the reclining mechanism and select one of said the first and second conditions of said stopper mechanism.

2. A foldable reclining seat as claimed in Claim 1, in which said stopper mechanism comprises:
a base plate adapted to be mounted on said floor, said base plate being formed with an arcuate recess and an arcuate ridge between which a stopper wall is defined, said arcuate recess and said arcuate ridge being concentric with said given axis;
an arm secured to said seatback to move therewith and pivotally connected to said base plate through a center shaft which has said given axis; and
a lock lever pivotally connected to said arm, said lock lever having a pawl which is selectably engageable with said arcuate recess, said stopper wall and said arcuate ridge,
wherein said first and second conditions of the stopper mechanism take place when said pawl is engaged with said arcuate recess and arcuate ridge respectively.

3. A foldable reclining seat as claimed in Claim 2, in which said stopper wall is so constructed and arranged that when the pawl of said lock lever is brought into abutment with said stopper wall, a further pivoting of said seatback in said folding direction is suppressed.

4. A foldable reclining seat as claimed in Claim 3, in which when said second controller is actuated in a given direction, the pawl of said lock lever is forced to ride over said stopper wall and put on said arcuate ridge to bring about said second condition of said stopper mechanism.

5. A foldable reclining seat as claimed in Claim 2, in which said stopper mechanism further comprises a biasing spring for biasing said lock lever to pivot in a direction to establish the engagement between the pawl of said lock lever and said arcuate recess of said base plate.

6. A foldable reclining seat as claimed in Claim 5, in which said biasing spring is disposed at its turned middle portion about a pivot pin of said lock lever with one end hooked to said arm and the other end hooked to said lock lever.

7. A foldable reclining seat as claimed in Claim 2, in which said biasing means is a spiral return spring which is disposed about said center shaft with one end hooked to said base plate and the other end hooked to said center shaft.

8. A foldable reclining seat as claimed in Claim 2, in which said base plate is connected to said second controller through an actuating wire.

9. A foldable reclining seat as claimed in Claim 1, in which said first controller comprises:
a pull tab;
an actuating rod having one end operatively connected to said reclining mechanism;
a first pivotal lever to which the other end of said actuating rod is connected;
a third pivotal lever to which said pull tab is connected, said first and third pivotal levers being pivotally connected to a common pivot shaft;
a control pin secured to said first pivotal lever to move therewith; and
an arcuate slot formed in said third pivotal lever, which is concentric with said common pivot shaft and slidably receives therein said control pin,
wherein when said pull tab is moved in a given direction, an end of said arcuate slot of said third pivotal lever is brought into abutment with said control pin of said first pivotal lever thereby pivoting said first pivotal lever in a direction to establish through said actuating rod said unlocked condition of said reclining mechanism.

10. A foldable reclining seat as claimed in Claim 9, in which said second controller comprises:
a control knob;
a second pivotal lever pivotally connected to said common pivot shaft of said first controller;
a first actuating wire extending from said control knob to said second pivotal lever;
a second actuating wire extending from said control knob to said stopper mechanism; and
an arcuate slot formed in said second pivotal lever, which is concentric with said common pivot shaft and slidably receives therein said control pin,
where in when said control knob is moved in a given direction, said first actuating wire is moved in such a direction that an end of said arcuate slot of said second pivotal lever is brought into abutment with said control pin of said first pivotal lever thereby pivoting said first pivotal lever in the direction to establish through said actuating rod said unlocked condition of said reclining mechanism and at the same time said second actuating wire is moved in such a direction as to induce said second condition of said stopper mechanism.

11. A foldable reclining mechanism as claimed in Claim 10, in which said first and second controllers are mounted on said seatback.

12. A foldable reclining mechanism as claimed in Claim 1, in which said reclining mechanism comprises:
a base plate adapted to be mounted on said floor;
an arm secured to said seatback to move therewith and pivotally connected to said base plate through a center shaft which has said given axis, said arm having a toothed portion which is rounded to be concentric with said center shaft;
a tooth member pivotally connected to said base plate, said tooth member having a toothed portion which is engageable with the toothed portion of said arm; and
an actuating mechanism which selectively causes engagement and disengagement between the toothed portion of said tooth member and the toothed portion of said arm in response to actuation of either one of said first and second controllers.

13. A foldable reclining mechanism as claimed in Claim 12, in which said actuating mechanism comprises:
a cam pivotally connected to said base plate, said cam being capable of pressing the toothed portion of said tooth member against the toothed portion of said arm when assuming a given angular position;
a lever pivotally connected to said base plate;
a pin secured to said cam to move therewith;
an elongate slot formed in said lever and slidably receiving therein said pin; and
a spring for biasing said lever in a direction to cause said cam to take said given angular position,
wherein when either one of said first and second controllers is actuated, said lever is pivoted in the other direction against the force of said spring thereby to cause through said cam cancellation of the engagement between the toothed portion of said tooth member and the toothed portion of said arm.

14. A foldable reclining seat as claimed in Claim 1, further comprising a seat sinking mechanism which lowers the seat proper relative to said floor when said seatback is pivoted in the folding direction and folded onto said seat proper.

15. A foldable reclining seat as claimed in Claim 14, in which said seat sinking mechanism comprises:
a pair of pivotal support units each including a bracket secured to said floor and a link having a lower end pivotally connected to said bracket and an upper end pivotally connected to said seat proper; and
a pair of follower links each having one end pivotally connected to a lower portion of said seatback and the other end pivotally connected to a rear portion of said seat proper.

## Patentansprüche

1. Zurückklappbarer Sitz, vorgesehen, um auf einem Boden montiert zu werden, mit:
einem eigentlichen Sitz (9), vorgesehen, um auf dem Boden montiert zu werden,
einer Sitzrückenlehne (4), angeordnet an einem hinteren Abschnitt des eigentlichen Sitzes und schwenkbar um eine gebebene Achse;
einer Neigungsvorrichtung (50), angeordnet auf der einen Seite des Sitzes,
wobei die Neigungsvorrichtung (50) gestattet, dass die Sitzrückenlehne eine gewünschte Winkelposition innerhalb eines gegebenen Bereiches zu dem eigentlichen Sitz einnimmt,
wobei die Neigungsvorrichtung einen verriegelten Zustand annimmt, in dem die Sitzrückenlehne in der gewünschten Winkelposition im Verhältnis zu dem Sitz selbst verriegelt ist, und einen nicht- verriegelten Zustand, in dem der Sitzrükkenlehne gestattet ist, in die Klapprichtung zu schwenken,
**gekennzeichnet durch** eine Vorspanneinrichtung (68), die die Sitzrückenlehne vorspannt, um in eine Faltrichtung im Verhältnis zu dem Sitz selbst zu schwenken, wenn die Neigungsvorrichtung (50) in dem nicht- verriegelten Zustand ist;
eine Anschlagvorrichtung, angeordnet auf der anderen Seite des Sitzes, wobei die Anschlagvorrichtung einen ersten Zustand annimmt, in dem der Sitzrückenlehne gestattet ist, innerhalb eines Bereiches, der dem gegebenen Bereich entspricht, zu schwenken, und einen zweiten Zustand, in dem der Sitzrückenlehne gestattet ist, in einer Klapprichtung in solch einem Grad zu schwenken, um auf dem Sitz selbst geklappt zu werden;
einen ersten Steuerer (52, 53), um nur die Neigungsvorrichtung zu steuem, um einen der verriegelten oder der nicht- verriegelten Zustände desselben auszuwählen; und
einen zweiten Steuerer (60, 61), um sowohl die Neigungsvorrichtung (50), als auch die Anschlagvorrichtung (51) zu steuern, um einen der verriegelten oder der nicht- verriegelten Zustände der Neigungsvorrichtung auszuwählen und einen der ersten oder zweiten Zustände der Anschlagvorrichtung auszuwählen.

2. Zurückklappbarer Sitz nach Anspruch 1, in dem die Anschlagvorrichtung aufweist:
eine Grundplatte, vorgesehen, um auf dem Boden montiert zu werden, wobei die Grundplatte mit einer bogenförmigen Aussparung und einem bogenförmigen Steg gebildet ist, zwischen denen eine Anschlagwand gebildet ist, wobei die bogenförmige Aussparung und der bogenförmige Steg mit der gegebenen Achse konzentrisch sind;
einen Arm, befestigt an der Sitzrückenlehne, um sich mit dieser zu bewegen und schwenkbar mit der Grundplatte durch eine Mittelwelle verbunden, die die gegebene Achse hat; und
einen Verriegelungshebel, schwenkbar mit dem Arm verbunden, wobei der Verriegelungshebel eine Klinke hat, die wahlweise mit der bogenförmigen Aussparung, die Anschlagwand oder dem bogenförmigen Steg in Eingriff bringbar ist, wobei der erste und zweite Zustand der Anschlagvorrichtung auftreten, wenn die Klinke jeweils mit der bogenförmigen Aussparung oder dem bogenförmigen Steg im Eingriff ist.

3. Zurückklappbarer Sitz nach Anspruch 2, in dem die Anschlagwand so aufgebaut und angeordnet ist, dass dann, wenn die Klinke des Verriegelungshebels mit der Anschlagwand in Anlage gebracht wird, ein weiteres Schwenken der Sitzrückenlehne in die Klapprichtüng unterdrückt wird.

4. Zurückklappbarer Sitz nach Anspruch 3, bei dem, wenn der zweite Steuerer in eine gegebene Richtung betätigt wird, die Klinke des Verriegelungshebels gezwungen wird, über die Anschlagwand hinwegzugehen und auf dem bogenförmigen Steg zu liegen, um den zweiten Zustand der Anschlagvorrichtung hervorzubringen.

5. Zurückklappbarer Sitz nach Anspruch 2, bei dem die Anschlagvorrichtung außerdem eine Vorspannfeder zum Vorspannen des Verriegelungshebels aufweist, um in eine Richtung zu schwenken, um den Eingriff zwischen der Klinke des Verriegelungshebels und der bogenförmigen Aussparung der Grundplatte zu begründen.

6. Zurückklappbarer Sitz nach Anspruch 5, bei dem die Vorspannfeder an ihrem gedrehten Mittelabschnitt um einen Schwenkbolzen des Verriegelungshebels, mit einem Ende eingehakt an dem Arm und mit dem anderen Ende an dem Verriegelungshebel eingehakt angeordnet ist.

7. Zurückklappbarer Sitz nach Anspruch 2, in dem die Vorspanneinrichtung eine Rückstellspiralfeder ist, die um die Mittelwelle angeordnet ist, mit dem einen Ende an der Grundplatte eingehakt, und mit dem anderen Ende an der Mittelwelle eingehakt.

8. Zurückklappbarer Sitz nach Anspruch 2, in dem die Grundplatte mit dem zweiten Steuerer durch einen Betätigungsdraht verbunden ist.

9. Zurückklappbarer Sitz nach Anspruch 1, bei dem der erste Steuerer aufweist:
eine Zugschlaufe;
eine Betätigungsstange, die an einem Ende mit der Neigungsvorrichtung betrieblich verbunden ist;
einen ersten Schwenkhebel, mit dem das andere Ende der Betätigungsstange verbunden ist;
einen dritten Schwenkhebel, an dem die Zugschlaufe verbunden ist, wobei der erste und dritte Schwenkhebel schwenkbar mit einer gemeinsamen Schwenkwelle verbunden sind;
einen Steuerbolzen, befestigt an dem ersten Schwenkhebel, um mit diesem bewegt zu werden; und
einen bogenförmigen Schlitz, gebildet in dem dritten Schwenkhebel, der mit der gemeinsamen Schwenkwelle konzentrisch ist und darin den Steuerbolzen gleitbar aufnimmt,
wobei, wenn die Zugschlaufe in eine gegebene Richtung bewegt wird, ein Ende des bogenförmigen Schlitzes des dritten Schwenkhebels mit dem Steuerbolzen des ersten Schwenkhebels in Anlage gebracht wird, um dadurch den ersten Schwenkhebel in eine Richtung zu schwenken, um durch die Betätigungsstange den nicht- verriegelten Zustand der Neigungsvorrichtung zu schaffen.

10. Zurückklappbarer Sitz nach Anspruch 9, bei dem der zweite Steuerer aufweist:
einen Steuerknopf;
einen zweiten Schwenkhebel, schwenkbar mit der gemeinsamen Schwenkwelle des ersten Steuerers verbunden;
einen ersten Betätigungsdraht, der sich von dem Steuerknopf zu dem zweiten Schwenkhebel erstreckt;
einen zweiten Betätigungsdraht, der sich von dem Steuerknopf zu der Anschlagvorrichtung erstreckt; und
einen bogenförmigen Schlitz, gebildet in dem zweiten Schwenkhebel, wobei der Schlitz mit der gemeinsamen Schwenkwelle konzentrisch ist und gleitbar darin den Steuerbolzen aufnimmt,
wobei, wenn der Steuerknopf in eine gegebene Richtung bewegt wird, der erste Betätigungsdraht in solch eine Richtung bewegt wird, dass ein Ende des Betätigungsschlitzes des zweiten Schwenkhebels in Anlage mit dem Steuerbolzen des ersten Schwenkhebels gebracht wird, um dabei den ersten Schwenkhebel in eine Richtung zu schwenken, um durch die Betätigungsstange den nichtverriegelten Zustand der Neigungsvorrichtung zu begründen und gleichzeitig wird der zweite Betätigungsdraht in solch eine Richtung bewegt, um den zweiten Zustand der Anschlagvorrichtung herbeizuführen.

11. Zurückklappbarer Sitz nach Anspruch 10, in dem der erste und der zweite Steuerer an der Sitzrückenlehne montiert sind.

12. Zurückklappbarer Sitz nach Anspruch 1, bei dem die Neigungsvorrichtung aufweist:
eine Grundplatte, vorgesehen, um auf dem Boden montiert zu werden;
einen Arm, befestigt an der Sitzrückenlehne, um sich mit dieser zu bewegen und schwenkbar mit der Grundplatte durch eine Mittelwelle verbunden, die die gegebene Achse hat, wobei der Arm einen verzahnten Abschnitt hat, der abgerundet ist, um mit der Mittelwelle konzentrisch zu sein;
ein Verzahnungsteil, schwenkbar mit der Grundplatte verbunden, wobei das Verzahnungsteil einen verzahnten Abschnitt hat, der mit dem verzahnten Abschnitt des Armes in Eingriff bringbar ist; und
eine Betätigungsvorrichtung, die wahlweise den Eingriff oder das Ausrükken zwischen den verzahnten Abschnitt des Verzahnungsteil und dem verzahnten Abschnittes des Arms in Abhängigkeit von der Betätigung entweder des ersten, oder des zweiten Steuerers veranlasst.

13. Zurückklappbarer Sitz nach Anspruch 12, in dem die Betätigungsvorrichtung aufweist:
einen Nocken, schwenkbar mit der Grundplatte verbunden, wobei der Nocken in der Lage ist, den verzahnten Abschnitt des Verzahnungsteiles gegen den verzahnten Abschnitt des Armes zu pressen, wenn eine gegebene Winkelposition angenommen wird;
einen Hebel, schwenkbar mit der Grundplatte verbunden;
einen Bolzen, an dem Nocken befestigt, um sich mit diesem zu bewegen;
einen langgestreckten Schlitz, in dem Hebel gebildet und der darin gleitbar den Bolzen aufnehmend; und
eine Feder, um den Hebel in eine Richtung vorzuspannen, um den Nocken zu veranlassen, die gegebene Winkelposition einzunehmen,
wobei, wenn entweder der erste, oder der zweite Steuerer betätigt wird, der Hebel in die andere Richtung entgegen der Kraft der Feder geschwenkt wird, um durch den Nocken die Aufhebung des Eingriffs zwischen dem verzahnten Abschnittes des Verzahnungsteiles und des verzahnten Abschnittes des Arms zu veranlassen.

14. Zurückklappbarer Sitz nach Anspruch 1, der außerdem eine Sitzabsenkungsverrichtung aufweist, die den eigentlichen Sitz relativ zu dem Boden absenkt, wenn die Sitzrückenlehne in Klapprichtung abgesenkt wird und auf den eigentlichen Sitz gefaltet wird.

15. Zurückklappbarer Sitz nach Anspruch 14, in dem die Sitzversenkungsvorrichtung aufweist:
ein Paar Schwenklagereinheiten, die jede einen an dem Boden befestigten Halter enthält, und ein Verbindungsstück, das ein unteres Ende mit dem Halter schwenkbar verbunden hat, und ein oberes Ende, schwenkbar mit dem eigentlichen Sitz schwenkbar verbunden hat; und
ein Paar Stößelverbinder, von denen jedes ein Ende mit dem unteren Abschnitt der Sitzrückenlehne schwenkbar verbunden ist, und das andere Ende mit dem hinteren Abschnitt des eigentlichen Sitzes schwenkbar verbunden ist.

## Revendications

1. Siège rabattable et inclinable conçu pour être installé sur un plancher, comprenant :
un siège proprement dit (9) conçu pour être monté sur ledit plancher ;
un dossier de siège (4) agencé à une portion arrière dudit siège proprement dit et apte à pivoter autour d'un axe donné ;
un mécanisme d'inclinaison (50) agencé à un côté du siège, ledit mécanisme d'inclinaison (50) permettant audit dossier de siège d'occuper une position angulaire souhaitée dans une plage donnée relativement audit siège proprement dit, ledit mécanisme d'inclinaison se trouvant dans un état verrouillé, où ledit dossier de siège, à la position angulaire souhaitée, est verrouillé relativement audit siège proprement dit, et un état déverrouillé où ledit dossier de siège peut pivoter dans la direction de rabattement,
**caractérisé par** un moyen de sollicitation (68) pour amener ledit dossier de siège à pivoter dans une direction de rabattement relativement audit siège proprement dit lorsque ledit mécanisme d'inclinaison (50) se trouve dans ledit état déverrouillé ;
un mécanisme d'arrêt disposé de l'autre côté dudit siège, ledit mécanisme d'arrêt occupant un premier état où ledit dossier de siège peut pivoter dans une plage correspondant à ladite plage donnée, et un second état où ledit dossier de siège peut pivoter dans la direction de rabattement selon un degré tel qu'il est rabattu sur ledit siège proprement dit ;
un premier dispositif de commande (52, 53) pour commander seulement ledit mécanisme d'inclinaison pour sélectionner l'un des états verrouillé et déverrouillé de celui-ci ; et
un deuxième dispositif de commande (60, 61) pour commander à la fois ledit mécanisme d'inclinaison (50) et ledit mécanisme d'arrêt (51) pour sélectionner l'un des états verrouillé et déverrouillé du mécanisme d'inclinaison et pour sélectionner l'un desdits premier et deuxième états dudit mécanisme d'arrêt.

2. Siège rabattable et inclinable selon La revendication 1, où ledit mécanisme d'arrêt comprend :
une plaque de base conçue pour être installée sur ledit plancher, ladite plaque de base présentant un évidement arqué et une nervure arquée entre lesquels une paroi d'arrêt est définie, ledit évidement arqué et ladit e nervure arquée étant concentriques avec ledit axe donné ;
un bras fixé audit dossier dé siège pour se déplacer avec celui-ci et relié d'une manière pivotante à ladit e plaque de base par un arbre central qui présente ledit axe donné ; et
un levier de verrouillage relié d'une manière pivotante audit bras, ledit levier de verrouillage comportant un cliquet qui peut être engagé sélectivement dans ledit évidement arqué, ladite paroi d'arrêt et ladite nervure arquée,
où lesdits premier et second états du mécanisme d'arrêt ont lieu lorsque ledit cliquet est en prise avec ledit évidement arqué et ladite nervure arquée, respectivement.

3. Siège rabattable et inclinable selon la revendication 2, où ladite paroi d'arrêt est construite et agencée de façon que lorsque le cliquet dudit levier de verrouillage est amené à buter contre ladite paroi d'arrêt, un pivotement ultérieur dudit dossier de siège dans ladite direction de rabattement soit supprimé.

4. Siège rabattable et inclinable selon la revendication 3, où, lorsque ledit deuxième dispositif de commande est actionné dans une direction donnée, le cliquet dudit levier de verrouillage est contraint à passer sur ladite paroi d'arrêt et à se placer sur ladite nervure arquée pour entraîner ledit second état dudit mécanisme d'arrêt.

5. Siège rabattable et inclinable selon la revendication 2, où ledit mécanisme d'arrêt comprend en outre un ressort de sollicitation pour amener ledit levie r de verrouillage à pivoter dans une direction pour établir la prise entre le cliquet dudit levier de verrouillage et ledit évidement arqué de ladite plaque de base.

6. Siège rabattable et inclinable selon la revendication 5, où ledit ressort de sollicitation est disposé à sa portion médiane tournée autour d'un pivot dudit levier de verrouillage, une extrémité étant accrochée audit bras, et l'autre extrémité étant accrochée audit levier de verrouillage.

7. Siège rabattable et inclinable selon la revendication 2, où ledit moyen de sollicitation est un ressort de rappel en spirale qui est disposé autour dudit arbre central, une extrémité étant accrochée à ladite plaque de base, et l'autre extrémité étant accrochée audit arbre central.

8. Siège rabattable et inclinable selon la revendication 2, où ladite plaque de base est reliée audit deuxième dispositif de commande par un fil d'actionnement.

9. Siège rabattable et inclinable selon la revendication 1, où ledit premier dispositif de commande comprend :
une patte de traction ;
une tige d'actionnement ayant une extrémité fonctionnellement reliée audit mécanisme d'inclinaison ;
un premier levier pivotant auquel l'autre extrémité de ladite tige d'actionnement est reliée ;
un troisième levier pivotant auquel ladite patte de traction est reliée, lesdits premier et troisième leviers pivotants étant reliés d'une manière pivotante à un pivot commun ;
un axe de commande fixé audit premier levier pivotant pour se déplacer avec celui-ci ; et
une fente arquée ménagée dans ledit troisième levier pivotant, qui est concentrique avec ledit pivot commun et qui reçoit à l'intérieur d'une manière coulissante ledit axe de commande,
où, lorsque ladite patte de traction est tirée dans une direction donnée, une extrémité de ladite fente arquée dudit troisième levier pivotant est amenée à buter contre ledit axe de commande dudit premier levier pivotant en faisant ainsi pivoter ledit premier levier pivotant dans une direction pour établir par ladite tige d'actionnement ledit état déverrouillé dudit mécanisme d'inclinaison.

10. Siège rabattable et inclinable selon la revendication 9, où ledit deuxième dispositif de commande comprend :
un bouton de commande ;
un deuxième levier pivotant relié d'une manière pivotante audit pivot commun dudit premier dispositif de commande ;
un premier fil d'actionnement s'étendant dudit bouton de commande audit deuxième levier pivotant ;
un deuxième fil d'actionnement s'étendant dudit bouton de commande audit mécanisme d'arrêt ; et
une fente arquée ménagée dans ledit deuxième levier pivotant, qui est concentrique avec ledit pivot commun et qui reçoit d'une manière coulissante à l'intérieur ledit axe de commande,
où, lorsque ledit bouton de commande est déplacé dans une direction donnée, ledit premier fil d'actionnement est déplacé dans une direction telle qu'une extrémité de ladite fente arquée dudit deuxième levier pivotant est amenée à buter contre ledit axe de commande dudit premier levier pivotant en faisant ainsi pivoter ledit premier levier pivotant dans la direction pour établir par ladite tige d'actionnement ledit état déverrouillé dudit mécanisme d'inclinaison, et en même temps ledit deuxième fil d'actionnement est déplacé dans une telle direction qu'il induit le deuxième état dudit mécanisme d'arrêt.

11. Mécanisme rabattable et inclinable selon la revendication 10, où lesdits premier et deuxième dispositifs de commande sont montés sur ledit dossier de siège.

12. Mécanisme rabattable et inclinable selon la revendication 1, où ledit mécanisme d'inclinaison comprend :
une plaque de base conçue pour être installée sur ledit plancher ;
un bras fixé audit dossier de siège pour se déplacer avec celui-ci et relié d'une manière pivotante à ladite plaque de base par un arbre central qui présente ledit axe donné, ledit bras ayant une portion dentée qui est arrondie pour être concentrique avec ledit arbre central ;
un élément denté relié d'une manière pivotante à ladite plaque de base, ledit élément denté présentant une portion dentée qui peut être mise en prise avec la portion dentée dudit bras ; et
un mécanisme d'actionnement qui provoque sélectivement la mise en et hors prise entre la portion dentée dudit élément denté et la portion dentée dudit bras en réponse à l'actionnement de l'un quelconque parmi lesdits premier et deuxième dispositifs de commande.

13. Mécanisme rabattable et inclinable selon la revendication 12, où ledit mécanisme d'actionnement comprend :
une came reliée d'une manière pivotante à ladite plaque de base, ladite came étant apte à pousser la portion dentée dudit élément denté contre la portion dentée dudit bras lors de l'occupation d'une position angulaire donnée ;
un levier relié d'une manière pivotante à ladite plaque de base ;
un axe fixé à ladite came pour se déplacer ave c celle-ci ;
une fente oblongue ménagée dans ledit levier et recevant d'une manière coulissante à l'intérieur ledit axe ; et
un ressort pour solliciter ledit levier dans une direction pour amener ladite came à occuper ladite position angulaire donnée,
où, lorsque l'un quelconque desdits premier et deuxième dispositifs de commande est actionné, ledit levier est amené à pivoter dans l'autre direction contre la force dudit ressort pour provoquer ainsi par ladite came l'annulation de la prise entre la portion dentée dudit élément denté et la portion dentée dudit bras.

14. Siège rabattable et inclinable selon la revendication 1, comprenant en outre un mécanisme d'abaissement de siège qui abaisse le siège proprement dit relativement audit plancher lorsque ledit dossier de siège est amené à pivoter dans la direction de rabattement et est rabattu sur ledit siège proprement dit.

15. Siège rabattable et inclinable selon la revendication 14, où ledit mécanisme d'abaissement de siège comprend :
deux unités de support pivotantes comportant chacune un support fixé audit plancher et une bielle dont une extrémité inférieure est reliée d'une manière pivotante audit support et dont une extrémité supérieure est reliée d'une manière pivotante audit siège proprement dit ; et
deux bielles suiveuses, chacune ayant une extrémité reliée d'une manière pivotante à une portion inférieure dudit dossier de siège et l'autre extrémité reliée d'une manière pivotante à une portion arrière dudit siège proprement dit.
